# EUROPEAN PATENT APPLICATION

(11) **EP 2 226 178 A2**
(43) Date of publication of application: **08.09.2010**
(21) Application number: 10155099.4
(22) Date of filing: 01.03.2010
(51) Int. Cl.: B29C 47/90, B29C 47/88, B29C 47/92

(54) **Device and method for the calibration of extruded pipes**

(30) Priority: 03.03.2009 IT MI20090309
(71) Applicant: Tecnomatic S.R.L. Unipersonale, 24052 Azzano San Paolo (BG) (IT)
(72) Inventor: Battaglia, Fausto, 41037 Mirandola MO (IT)
(74) Representative: Concone, Emanuele

(57) **Abstract**

A calibration device (4) comprises a calibration body (5) suitable to receive a tubular member (2) extruded by an extrusion head (1) and to provide said tubular member (2) with a preset outer diameter. The calibration body (5) comprises a plurality of apertures (7) formed in an inner wall (6) thereof and suitable to allow the injection of a cooling fluid during the passage of the tubular member (2). The calibration body (5) has an inner diameter larger than the tubular member (2) and the calibration device (4) further comprises means for rotating the cooling fluid around the tubular member (2) at such a speed as to cause the formation by centrifugal effect of a cylindrical cooling fluid sleeve around the tubular member (2), as well as means (11) suitable to inject a gas into the calibration body (5), the gas injection being combined with the injection of the cooling fluid.

## Description

The present invention relates to a device and a method for the calibration of plastic pipes and in particular for the calibration of plastic pipes manufactured by extrusion.

In the manufacturing by extrusion of pipes made of plastic materials there are known apparatuses generally comprising an extrusion system suitable to produce a hollow tubular member in a plastic state by starting from a plastic material that is generally in a granular form. At the outlet of the extrusion system, and more precisely from an extrusion head, the tubular member is pulled and passed through a cooling chamber suitable to allow the solidification of the tubular member and its dimensional stabilization. Between the extrusion head and the cooling chamber a calibration device is generally arranged, which allows to provide the extruded hollow tubular member with the desired external diameter.

Calibration devices are known that comprise a bath of cooling fluid, e.g. water, through which the extruded tubular member is directly passed. The calibration substantially occurs through the combined effect of the pulling action on the tubular member and of the cooling action in the bath of fluid. These devices are characterized by constructional simplicity and high manufacturing speed, but do not allow an accurate calibration of the size of the tubular member for any type of material, which limits the types of pipes that can be obtained through this technology.

There are also known calibration devices comprising a rigid annular member through which the tubular member is passed. The calibration still occurs through the combined effect of the pulling action on the tubular member and of the cooling in the bath of fluid, but is more accurate thanks to the contact between the inner wall of the rigid annular member and the outer wall of the tubular member.

Patent US 5085567 describes for example a manufacturing apparatus for pipes made of a plastic material, comprising an extrusion device and a cooling chamber arranged downstream thereof. Between the extrusion device and the cooling chamber there are a sleeve calibration device, suitable to provide an extruded tubular member with the desired size, and a device suitable to measure the thickness of the tubular member. Along the inner surface of the sleeve there are water inlets and suction ports. The water has the double function of cooling and lubricating the inner wall of the sleeve during the passage of the tubular member and the suction ports have the function of drawing and keeping the outer wall of the tubular member in contact with the inner wall of the sleeve. Along the inner wall of the sleeve there are also preferably formed spiral channels allowing a better distribution of the water and of the suction ports along the calibration path.

Patent US 5516270 describes a calibration device for extruded pipes that is similar to the previous one and wherein the calibration sleeve is provided with a cooling system enclosed in the wall of the sleeve and therefore separated from the lubrication system.

Patent EP 1201399 describes a calibration device for plastic pipes comprising a cooling tank inside which a cylindrical-shaped body suitable to receive a tubular member produced by an extrusion device is arranged. The cooling tank is under vacuum and the inner wall of the calibration body has a plurality of apertures allowing both the injection of a fluid for the cooling and/or the lubrication of the outer wall of the tubular member, and the suction of air. At the inlet of the calibration body there is a widely rounded flange allowing to carry the tubular member into the calibration device. The flange is provided with holes allowing to dispense a cooling and/or lubricating fluid, as well as with spiral grooves formed along its inner surface allowing the circulation of said fluid. Under the action of the vacuum generated inside the calibration body through the apertures formed in its inner wall, the fluid dispensed at the inlet flange is drawn towards the calibration body by flowing along the spiral grooves and therefore circulating around the tubular member, thus minimizing its problems of adhesion to the walls of the calibration device.

Thanks to the presence of a rigid calibration body, contact calibration devices allow to obtain a more accurate calibration of the size of the tubular member. However, despite the presence of lubrication systems, contact calibration devices are characterized by manufacturing speeds that are remarkably lower than the manufacturing speeds of calibration devices comprising a bath of fluid.

Due to its weight and under the action of vacuum, in fact, the tubular member tends anyway to adhere to the inner wall of the calibration body, thus being unable to completely avoid the contact problems.

Moreover, the manufacturing speed is limited also due to warpage problems caused by the cooling speed. In fact the relationship between specific volume and temperature characterizing the different polymeric materials used in the manufacturing of pipes is not always a linear relationship, which would allow to follow the volume variations e.g. by simply providing for a progressive reduction of the inner diameter of the calibration body along the cooling path.

For instance, olefin materials such as polypropylene and polyethylene have a substantially step-like discontinuity of the specific volume at temperatures that are typical of the cooling path in the extrusion processes. This may cause strong internal stresses that can result in warpages of the tubular member either in the transverse or in the longitudinal direction, thus penalizing the subsequent uses of the finished pipe.

A possible solution to the cooling problem is proposed in the international patent publication WO 9710093, which discloses a calibration sleeve for extruded pipes comprising a plurality of annular portions through which a lubricating fluid is injected. The annular portions are separated from one another by drainage zones that allow to control both the pressure and the temperature of the fluid injected from the single annular portions along the path of the tubular member from upstream to downstream of the calibration sleeve. Thanks to the control of the fluid temperature along the path of the tubular member through the calibration sleeve it is possible to obtain an accurate calibration. However, the system is rather complex and expensive due to the presence of a plurality of annular portions that are supplied separately and with fluids at a different temperature.

It is therefore an object of the present invention to provide a pipe calibration device and method, which allow to overcome these disadvantages. Said object is achieved with a calibration device and method, whose main features are disclosed in claims 1 and 10, respectively, while other features are disclosed in the remaining claims.

The calibration device according to the invention comprises a calibration body suitable to provide a tubular member with a preset external diameter. Along the inner wall of the calibration body a plurality of apertures are formed that are suitable to allow the injection of a cooling fluid onto the tubular member. The calibration body has an inner diameter larger than the tubular member and the calibration device further comprises means for rotating the cooling fluid around the tubular member at such a speed as to cause the formation by centrifugal effect of a cooling fluid sleeve around the tubular member, whereby the passage of the tubular member through the calibration body occurs without contact with the inner wall of the latter. During the passage of the tubular member through the calibration device a gas is injected together with the cooling fluid, thus allowing to obtain a mixture having a variable density and therefore to adjust both the buoyancy force and the cooling capacity of the cooling fluid.

Thanks to the formation of a cylindrical fluid sleeve around the extruded tubular member it is possible to completely eliminate the friction problems due to the contact between the tubular member and the inner wall of the cylindrical body, thus allowing to reach manufacturing speeds remarkably higher than the manufacturing speeds of known calibration devices.

The main advantage offered by the invention is that the calibration device allows to retain the precision typical of contact calibration devices while operating at speeds that are remarkably higher. In fact, the cylindrical fluid sleeve allows to obtain a buoyancy force, and therefore a supporting force, and a centering force of the tubular member in the calibration body, thus carrying out the same function as a rigid annular member in conditions of substantially negligible friction.

Another advantage offered by the invention is that the temperature of the cooling fluid may be measured and adjusted, thus allowing to work both with materials having a substantially linear relationship between specific volume and temperature and with materials having a strongly nonlinear relationship between specific volume and temperature and that are therefore subject to problems of warpage and internal stress build-up during cooling. The finished pipes will therefore be free from the problems of internal stress build-up along the longitudinal and radial directions.

Still another advantage offered by the invention is that the cooling fluid may also have lubricating properties, thus further facilitating the passage of the tubular member through the cylindrical body.

Further advantages and features of the calibration device and method according to the present invention will become clear to those skilled in the art from the following detailed and non-limiting description of embodiments thereof with reference to the attached drawings, wherein:
- figure 1 schematically shows an extrusion apparatus for pipes provided with a calibration device according to the invention; and
- figure 2 shows a longitudinal section of the calibration device of figure 1 taken along line II-II.

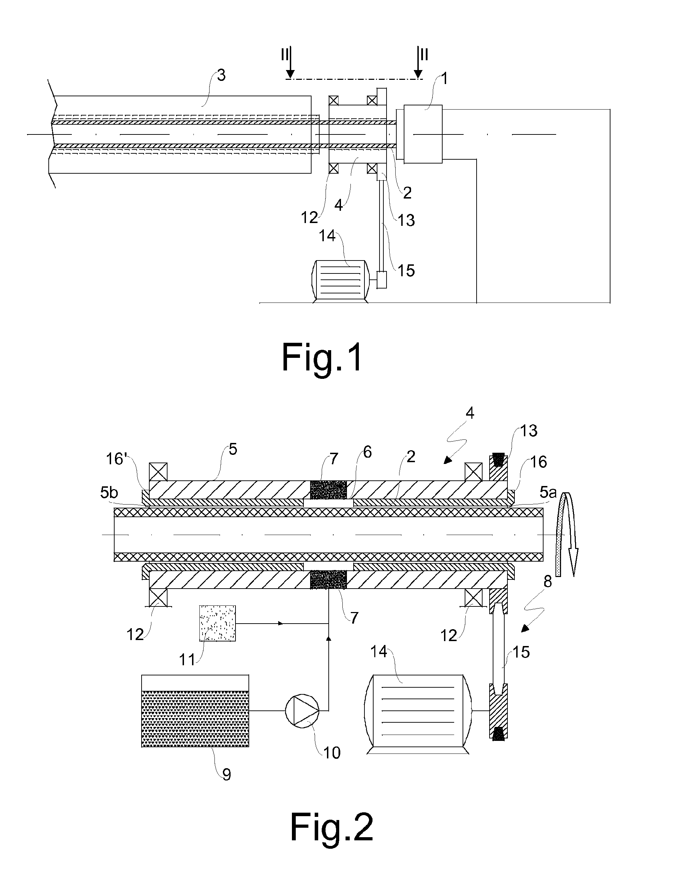

Figure 1 schematically shows an extrusion apparatus for pipes comprising an extrusion head 1 suitable to produce a hollow tubular member 2. Downstream of the extrusion head 1 there is a cooling chamber 3 suitable to receive the hollow tubular member 2 and to allow its solidification and dimensional stabilization. Between the extrusion head 1 and the cooling chamber 3 a calibration device 4 is arranged, which allows to provide the hollow tubular member 2 with the desired external diameter.

Referring to figure 2, the calibration device 4 comprises a calibration body 5, e.g. having a cylindrical shape, provided with an inlet 5a and an outlet 5b. A plurality of apertures 7 suitable to allow the injection of a cooling fluid, e.g. water, during the passage of the tubular member 2 are formed in the inner wall 6 of the calibration body 5. The cooling fluid may advantageously be also a lubricating fluid, thus facilitating the passage of the tubular member 2 through the body 5.

The calibration body 5 has an inner diameter larger than the diameter of the tubular member 2, which is thus received with a play into the calibration body 5, and the calibration device 4 further comprises means suitable to rotate the cooling fluid around the tubular member 2 at such a speed as to cause the formation by centrifugal effect of a cylindrical sleeve of cooling fluid around the tubular member 2, whereby the passage of the tubular member 2 through the calibration body 5 occurs without contact with its inner wall 6.

In the embodiment shown in figures 1 and 2, the calibration body 5 is rotatably mounted around its longitudinal axis and the calibration device 4 comprises driving means 8 suitable to rotate the calibration body 5 during the passage of the tubular member 2. Therefore, the cooling fluid is dragged into rotation by the calibration body 5, thus forming a cylindrical sleeve around the tubular member 2.

By centrifugal effect, in fact, the cooling fluid set into rotation by the calibration body 5 is radially pressed onto the inner wall 6 and generates by reaction a force on the tubular member 2 allowing at the same time its buoyancy and centering with respect to the inner surface of the calibration body 5, thus eliminating any contact with the inner wall 6.

Alternatively, the formation of a fluid sleeve around the tubular member 2 may be obtained by holding the calibration body 5 still and injecting the cooling fluid under pressure tangentially to the inner wall 6. Also in this case the cooling fluid is radially pressed onto the inner wall 6 and generates by reaction a force on the tubular member 2 allowing at the same time its buoyancy and centering with respect to the inner surface of the calibration body 5.

The cooling fluid may be supplied e.g. from a tank 9 by means of a pump 10.

The injection of the cooling fluid is combined with the injection of a gas, e.g. air, thus obtaining a mixture having a variable density. The gas may be injected e.g. from a suitable tank 11. This solution is particularly advantageous because it provides a certain degree of compressibility of the fluid sleeve surrounding the tubular member 2. Therefore, at the same fluid flow rate, it is possible to vary the buoyancy force on the tubular member 2. Further adjustments of the outer diameter of the tubular member 2 are therefore possible, which contributes to increase the accuracy and the versatility of the calibration device 4 and consequently the dimensional precision of the finished pipe.

Still with reference to figures 1 and 2, the calibration body 5 may e.g. be mounted on a pair of bearings 12 and a pulley 13 is fitted on the calibration body 5, e.g. at the inlet 5a, the pulley being connected to an electric motor 14 by means of a transmission belt 15. Alternatively, the pulley 13 might be replaced with a gear wheel connected to the motor 14 by means of a gear box.

In order to allow to effectively drag the cooling fluid into rotation, the inner wall 6 of the calibration body 5 may comprise a plurality of longitudinal and/or spiral grooves, thus facilitating both the rotation of the cooling fluid and its movement along the axial direction of the calibration body 5.

Preferably, the inlet 5a has a conic shape suitable to facilitate the alignment and centering of the tubular member 2 coming out from the extrusion head 1 with respect to the calibration body 5.

During the passage through the calibration body 5 the tubular member 2 is subject to a diameter reduction due to the cooling. Therefore, the inner wall 6 of the calibration body 5 is preferably provided with a diameter reduction (not shown) from the inlet 5a to the outlet 5b.

Moreover, the injection apertures 7 are preferably formed at an intermediate portion of the calibration body 5, thus allowing to minimize the size of the calibration device 4 close to the extrusion head 1. This arrangement is also very advantageous in that it allows to direct the cooling fluid towards both the inlet 5a and the outlet 5b of the calibration body 5. By suitably choosing the geometry of the grooves formed in the inner wall 6 it is possible to differentiate the circulation mode of the fluid inside the calibration body 5, e.g. it is possible to facilitate the passage of the fluid towards the inlet 5a or the outlet 5b.

Preferably, when the calibration body 5 is rotatably mounted around its longitudinal axis the grooves have a longitudinal pattern in the portion comprised between the inlet 5a and the injection apertures 7, thus facilitating the action of supporting and centering the tubular member 2. On the contrary, in the portion comprised between the injection apertures 7 and the outlet 5b the grooves preferably have a spiral pattern suitable to facilitate the circulation of the cooling fluid towards the outlet 5b and therefore the feeding of the tubular member 2.

Depending on the fluid flow rate foreseen during the operation, the injection apertures 7 may be made as holes or slits, or members made of a sintered material may be used, the injection apertures 7 being in this case formed by the voids included in the porosities of the sintered material. The use of sintered materials is preferred because the porosities of the material generate gas bubbles having an extremely reduced size and thus allow an intimate and complete mixing of the injected gas with the fluid, which ensures a greater uniformity of performance of the fluid sleeve in its functions of supporting and centering the tubular member 2.

Advantageously, the inner wall 6 of the calibration body 5 may be covered with one or more sleeves 16 coaxially inserted therein. In this case the grooves are directly formed on the one or more sleeves and the progressive diameter reduction from the inlet 5a to the outlet 5b of the calibration body 5 may be obtained by simply varying the thickness of the sleeve in a suitable way.

The use of covering sleeves 16 is preferred because it allows to remarkably simplify the structure of the calibration body 5 and also to make it less expensive. Moreover, it is possible to adapt the calibration body 5 to a number of sizes and types of pipes by simply providing for the replacement of the sleeves 16 with other sleeves having different inner diameter and length.

In the embodiment shown in figure 2, the inner wall of the calibration body 5 is covered with two sleeves 16, 16' that are inserted between the inlet 5a and the injection apertures 7 and between the injection apertures 7 and the outlet 5b, respectively. In order to ensure a correct placement within the calibration body 5, each sleeve 16, 16' is provided at one end with a flange abutting on the respective end 5a, 5b as well as with blocking means (not shown) suitable to allow to fix them thereon.

The injected gas has an insulating effect that may be advantageously exploited by a temperature control system in particular in the case of materials having a strongly nonlinear behaviour. Moreover, the temperature of the cooling fluid may be measured e.g. by probes (not shown) and suitably adjusted by means of one or more heating members (not shown) connected to a control system (not shown). The cooling fluid may thus be injected into the calibration body 5 at different temperatures.

The temperature adjustment is carried out on the basis of the relationship between specific volume and temperature of the plastic material used, in order to minimize the risks of warpages along the radial and longitudinal directions in the tubular member 2 and in the finished pipe, as well as the problems of stress build-up during the extrusion process, in particular in the case of materials having a strongly nonlinear behaviour.

The temperature adjustment may be obtained by supplying the cooling fluid from a single source at a controlled temperature, e.g. tank 9. Alternatively, there might be more sources at a controlled temperature connected to the calibration body 5 at different places, or there might be more calibration devices 4 arranged in series, each provided with a fluid source at a controlled temperature, thus allowing to obtain a temperature gradient along the calibration path.

It is clear that the embodiments of the invention herein described and illustrated are only examples susceptible of numerous variants. For example, it is possible to provide for an extension of the sleeves 16 from the calibration body 5 to the cooling chamber 3, thus allowing the passage of the cooling fluid from the calibration device 4 to the cooling chamber 3 and thereby the formation of a temperature gradient along the whole path of the tubular member 2.

## Claims

1. A calibration device (4) for plastic pipes comprising a calibration body (5) suitable to receive a tubular member (2) extruded by an extrusion head (1) and to provide said tubular member (2) with a preset outer diameter, said calibration body (5) comprising a plurality of apertures (7) formed in an inner wall (6) thereof and suitable to allow the injection of a cooling fluid during the passage of the tubular member (2), wherein the calibration body (5) has an inner diameter larger than the tubular member (2) and wherein the calibration device (4) further comprises means for rotating the cooling fluid around the tubular member (2) at such a speed as to cause the formation by centrifugal effect of a cooling fluid sleeve around the tubular member (2), **characterized by** further comprising means (11) suitable to inject a gas into the calibration body (5), the gas injection being combined with the injection of the cooling fluid.

2. A calibration device according to the previous claim, wherein the calibration body (5) comprises members made of a sintered material, the injection apertures (7) being formed by the voids included in the porosities of said sintered material.

3. A calibration device according to claim 1 or 2, wherein the calibration body (5) is rotatably mounted around its longitudinal axis and the means for rotating the cooling fluid around the tubular member (2) consist of driving means (8) suitable to rotate the calibration body (5).

4. A calibration device according to claim 1 or 2, wherein the calibration body (5) is fixedly mounted around its longitudinal axis and the means for rotating the cooling fluid around the tubular member (2) consist of means (10) suitable to inject the cooling fluid under pressure tangentially with respect to the inner wall (6) of the calibration body (5).

5. A calibration device according to any of the previous claims, wherein the inner wall (6) of the calibration body (5) comprises a plurality of longitudinal and/or spiral grooves.

6. A calibration device according to any of the previous claims, wherein the inner wall (6) of the calibration body (5) has a diameter reduction between an inlet (5a) and an outlet (5b) thereof.

7. A calibration device according to any of the previous claims, wherein the injection apertures (7) are formed at an intermediate portion of the calibration body (5).

8. A calibration device according to any of the previous claims, further comprising means for measuring and adjusting the temperature of the cooling fluid.

9. An apparatus for the manufacturing of plastic pipes comprising a calibration device according to any of claims 1 to 8.

10. A method for the calibration of plastic pipes comprising the steps of:
a) inserting an extruded tubular member (2) into a calibration body (5);
b) pulling the tubular member (2) through the calibration body(5); and
c) injecting a cooling fluid into the calibration body (5) during the passage of the
tubular member (2);
wherein in step a) the tubular member (2) is inserted with play into the calibration body (5) and comprising a further step d) of rotating the cooling fluid around the tubular member (2) at such a speed as to cause the formation by centrifugal effect of a cylindrical sleeve of cooling fluid around the tubular member (2), whereby the passage of the tubular member (2) through the calibration body (5) occurs without contact with the inner wall (6) of the calibration body (5), **characterized by** further comprising a step of injecting of a gas together with the cooling fluid.

11. A calibration method according to the previous claim, wherein a lubricating fluid is used as a cooling fluid.

12. A calibration method according to claims 10 or 11, **characterized by** further comprising a step of measuring and adjusting the temperature of the cooling fluid.

13. A calibration method according to the previous claim, wherein said adjusting is carried out on the basis of a relationship between specific volume and temperature of the material forming the tubular member (2).
